# EUROPEAN PATENT APPLICATION

(11) **EP 3 702 913 A1**
(43) Date of publication of application: **02.09.2020**
(21) Application number: 18882068.2
(22) Date of filing: 24.10.2018
(51) Int. Cl.: G06F 9/451

(54) **INPUT OPERATION PROCESSING METHOD AND PROCESSING DEVICE, AND COMPUTER-READABLE STORAGE MEDIUM**

(30) Priority: 24.11.2017 CN 201711191433
(71) Applicant: Shanghai Zhonglian Technologies Ltd., Co, Shanghai 201419 (CN)
(72) Inventor: MA, Kunxiao, Jiangxi 330008 (CN)
(74) Representative: Ridderbusch, Oliver
(86) International application number: PCT/CN2018/111756
(87) International publication number: WO 2019/100898

(57) **Abstract**

The present invention provides an input operation processing method, a processing apparatus and a computer readable storage medium. The input operation processing method is used for processing input operations received by a smart terminal and comprises the following steps: presetting mapping relationships between at least two input operations and input events in an application program; detecting whether an input event interface of the application program receives an optional input event or not; when the input event interface receives the optional input event, recognizing, by the application program, the input operation corresponding to the input event according to the mapping relationship; converting the recognized input event into an input event coexisting with other types of input events; and reporting the input event coexisting with the other types of input events. After the implementation of the technical solutions, the smart terminal can be operated by means of an external input device or by combining the external input device with a touch screen, such that the flexibility of the input operations can be improved, and the user experience is enhanced.

## Description

### TECHNICAL FIELD

The present invention relates to the field of input operation processing of smart terminals, and more particularly to an input operation processing method, a processing apparatus and a computer readable storage medium.

### BACKGROUND

At present, smart terminals such as smart phones and tablet computers, especially smart terminals based on an Android operating system, are applied more and more popularly. Third parties have developed application programs (i.e., APP) that satisfy various application requirements on an architecture of this operating system. These application programs often require human-computer interaction with a user, that is, to receive user's input operations. Touch operations are mainly received by a touch screen of the smart terminal. However, applications such as games that need to connect to an external input device will generate different input events, such as external input events and touch screen input events, depending on different operation objects.

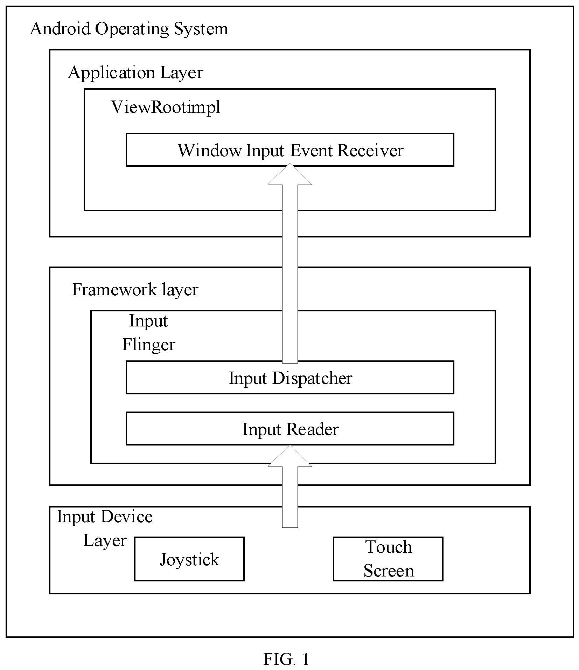

FIG. 1 is a block diagram of a processing flow of the Android operating system for input events, in which various layers under the Android operating system can be seen, wherein an Application layer includes a ViewRootimpl object which also includes a Window Input Event Receiver therein; a Framework layer includes an Input Flinger which also includes an Input Dispatcher and an Input Reader therein; and an Input Device layer includes a Joystick and a Touch Ccreen. When an input operation occurs, an input event is formed from an input device and reported layer by layer to the window input event receiver in the application layer. The current Android operating system supports the access of an external input device such as a Joystick, and the accessed external input device may send external input events to an application program. If the application program fails to specifically process the external input events, it will process the external input events according to default rules. That is, the window input event receiver in FIG. 1 will discard these events without any processing, which means that the application program can only recognize input operations received by the Touch Screen, but cannot recognize input operations received by the external input device.

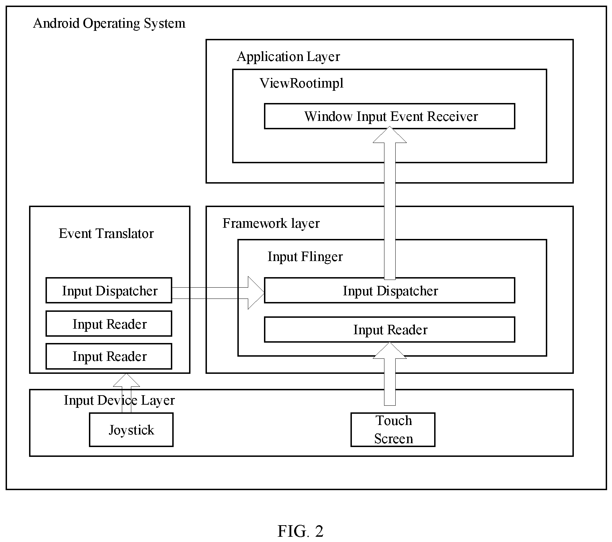

FIG. 2 is a block diagram of a processing flow for an external input event and a touch screen input event in the prior art. In order for an application program to recognize the input operations received by the external input device, a mapping relationship between the external input event and the touch screen event must be established. Specifically, in the prior art, an input Event Translator located at a framework layer of an operating system of a smart terminal is provided. After receiving each external input event from an external input device (such as a joystick) in the input device layer, the input event translator translates the external input event into a touch screen input event, aggregates the touch screen input events into an input flinger, and then uniformly reports the touch screen input events to a window input event receiver in the application layer. However, with respect to the application layer, regardless of an operation received by the external input device or an operation received by the touch screen, the application program can receive the touch screen input event, but cannot distinguish whether this event is generated by the touch screen or the external input device, which causes that the external input device and the touch screen cannot be used simultaneously, thereby affecting the user experience.

Therefore, it is necessary for the application program to recognize different input events to meet the user's needs for simultaneous operation of the touch screen and the external input device.

### SUMMARY

The present invention provides an input operation processing method that supports an external input device and a touch screen to perform input operations simultaneously.

The present invention discloses an input operation processing method, which is used for processing input operations received by a smart terminal, and comprises the following steps:
S101: presetting mapping relationships between at least two input operations and input events in an application program;
S102: detecting whether an input event interface of the application program receives an optional input event;
S103: when the input event interface receives the optional input event, recognizing, by the application program, the input operation corresponding to the input event according to the mapping relationship;
S104: converting the recognized input event into an input event coexisting with other types of input events; and
S105: reporting the input event coexisting with other types of input events.

Preferably, in step S101, the input operations include a touch operation received by a touch screen of the smart terminal and an external input operation received by an external input device connected to the smart terminal; and the touch operation corresponds to a touch screen input event, and the external input operation corresponds to an external input event.

Preferably, the step S104 includes:
S104-1: when the input event interface receives the touch screen input event, converting the touch screen input event into a first input event coexisting with the external input event; and
S104-2: when the input event interface receives the external input event, converting the external input event into a second input event coexisting with the touch screen input event.

Preferably, in step S102, the input event interface receives the input event from a framework layer of the operating system of the smart terminal.

Preferably, in step S101, the mapping relationship includes an identification bit of each input event; and in step S103, the application program recognizes the input operation corresponding to the input event according to the identification bit in the input event.

The present invention discloses an input operation processing apparatus which is used for processing input operations received by a smart terminal, and comprises:
a presetting module configured to preset mapping relationships between at least two input operations and input events in an application program;
a detection module configured to detect whether an input event interface of the application program receives any input event;
a recognition module connected to the detection module and the presetting module and configured to, when the input event interface receives an optional input event, recognize the input operation corresponding to the input event according to the mapping relationship;
a conversion module connected to the recognition module and configured to convert the recognized input event into an input event coexisting with other types of input events; and
a reporting module connected to the conversion module and configured to report the input event coexisting with other types of input events.

Preferably, when the presetting module presets the mapping relationships between at least two input operations and input events, the input operations include a touch operation received by a touch screen of the smart terminal and an external input operation received by an external input device connected to the smart terminal; and the touch operation corresponds to a touch screen input event, and the external input operation corresponds to an external input event.

Preferably, the conversion module includes:
a first conversion unit configured to, when the input event interface receives the touch screen input event, convert the touch screen input event into a first input event coexisting with the external input event; and
a second conversion unit configured to, when the input event interface receives the external input event, convert the external input event into a second input event coexisting with the touch screen input event.

Preferably, the detection module detects whether the input event interface receives the input event from the framework layer of the operating system of the smart terminal.

Preferably, when the presetting module presets the mapping relationships between at least two input operations and input events, the mapping relationships include an identification bit of each input event; and the recognition module recognizes the input operation corresponding to the input event according to the identification bit in the input event.

The present invention further discloses a computer readable storage medium on which a computer program is stored and which is configured to process input operations received by a smart terminal, wherein the computer program, when being performed by a processor, implements the following steps:
S106: presetting mapping relationships between at least two input operations and input events in an application program;
S107: detecting whether an input event interface of the application program receives an optional input event;
S108: when the input event interface receives the optional input event, recognizing, by the application program, the input operation corresponding to the input event according to the mapping relationship;
S109: converting the recognized input event into an input event coexisting with other types of input events; and
S110: reporting the input event coexisting with other types of input events.

Preferably, in step S106, the input operations include a touch operation received by a touch screen of the smart terminal and an external input operation received by an external input device connected to the smart terminal; and the touch operation corresponds to a touch screen input event, and the external input operation corresponds to an external input event.

Preferably, the step S109 includes:
S109-1: when the input event interface receives the touch screen input event, converting the touch screen input event into a first input event coexisting with the external input event; and
S109-2: when the input event interface receives the external input event, converting the external input event into a second input event coexisting with the touch screen input event.

Preferably, in step S107, the input event interface receives the input event from a framework layer of the operating system of the smart terminal.

Preferably, in step S106, the mapping relationships include an identification bit of each input event; and in step S108, the application program recognizes the input operation corresponding to the input event according to the identification bit in the input event.

After the above-mentioned technical solutions are adopted, compared with the prior art, the present invention has the following beneficial effects:
1. the smart terminal can be operated by means of an external input device or by combining the external input device with the touch screen, such that the flexibility of the input operations can be improved, and the user experience is enhanced.
2. Codes are modified only in the application layer, thereby achieving better compatibility with different operating system versions.

### BRIEF DESCRIPTION OF THE DRAWINGS

FIG. 1 is a block diagram of a processing flow of an Android operating system for input events in the prior art;
FIG. 2 is a block diagram of a processing flow for an external input event and a touch screen input event in the prior art.
FIG. 3 is a schematic flowchart of an input operation processing method in a preferred embodiment in accordance with the present invention;
FIG. 4 is a schematic flowchart of step S104 in FIG. 3;
FIG. 5 is a structural block diagram of an input operation processing apparatus in a preferred embodiment in accordance with the present invention;
FIG. 6 is a structural block diagram of a conversion module in FIG. 5;
FIG. 7 is a schematic flowchart of a computer program on a computer readable storage medium in a preferred embodiment in accordance with the present invention;
FIG. 8 is a schematic flowchart of step S109 in FIG. 7; and
FIG. 9 is a block diagram of an application program based on the Android operating system in a preferred embodiment in accordance with the present invention.

### Reference symbols represent the following components:

10-input operation processing apparatus; 11-presetting module; 12-detection module; 13-recognition module; 14-conversion module; 15-reporting module; 141-first conversion unit; 142-second conversion unit.

### DETAILED DESCRIPTION

The advantages of the present invention are further described hereinafter with reference to the drawings and the specific embodiments.

The exemplary embodiments are described in detail herein, and are illustratively shown in the drawings. When the following description refers to the drawings, unless otherwise indicated, the same numbers in different drawings indicate the same or similar elements. The embodiments described in the following exemplary embodiments do not represent all embodiments consistent with the present disclosure. On the contrary, they are merely examples of devices and methods consistent with some aspects of the present disclosure described in detail in the appended claims.

The terms used in the present disclosure are for the purpose of describing particular embodiments only and are not intended to limit the present disclosure. The singular forms of "a", "said" and "the" used in the present disclosure and the appended claims are also intended to include the plural forms, unless other meanings are clearly indicated by the context. It should also be understood that the term "and/or" used herein refers to and includes any or all possible combinations of one or more associated listed items.

It shall be understood that although the terms first, second, third, etc. may be used to describe various information in the present disclosure, the information should not be limited to these terms. These terms are only used to distinguish the information of the same type from each other. For example, the first information can also be referred to as the second information, and similarly, the second information can also be referred to as the first information without departing from the scope of the present disclosure. Depending on the context, the word "if" used herein can be explained as "in the case of", "when" or "in response to determine".

In the description of the present invention, it should be understood that the orientation or position relation indicated by the terms "longitudinal", "lateral", "upper", "lower", "front", "rear", "left", "right", "vertical", "horizontal", "top", "bottom", "inside", "outside" and the like is based on the orientation or position relation shown in the drawings, which is only used for convenience of description of the present invention and simplification of description instead of indicating or implying that the indicated device or element must have a specific orientation, and be constructed and operated in a specific orientation, and thus should not be understood as a limitation to the present invention.

In the description of the present invention, the terms "installation", "connected" and "connection" should be understood in broad sense unless otherwise specified and defined. For example, they can be mechanical connection or electrical connection, can also be connected inside two components, can be directly connected, and can also be indirectly connected through an intermediate medium. The specific meanings of the above terms can be understood in a specific case by those of ordinary skills in the art.

In the following description, the postfixes such as "module", "component" or "unit" used to indicate elements are only used to facilitate the description of the present invention and have no specific meanings in themselves. Therefore, the "module" and "component" can be used in a mixed way.

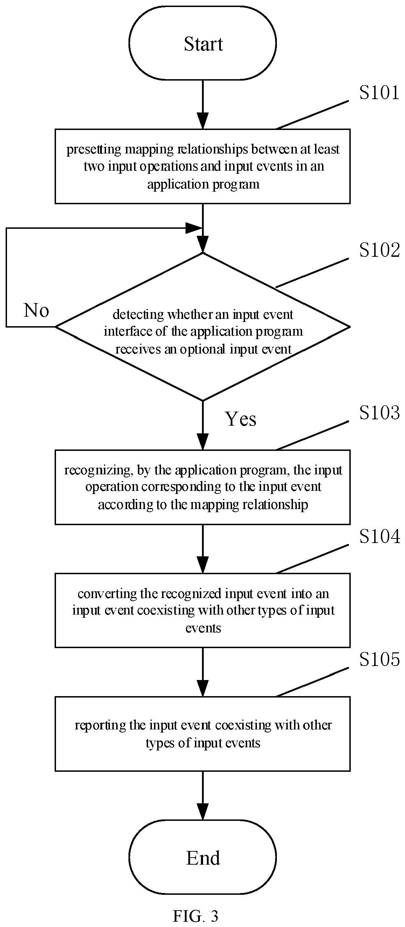

FIG. 3 is a schematic flowchart of an input operation processing method in a preferred embodiment in accordance with the present invention. The input operation processing method is used for processing input operations received by a smart terminal, and comprises the following steps:
S101: presetting mapping relationships between at least two input operations and input events in an application program.

Depending on different input devices, the input operations received by various input devices are also different. For example, a touch screen of the smart terminal can receive touch operations, and keys of the smart terminal can receive press operations. If the smart terminal is connected to an external input device such as a joystick or an external keyboard, it can accept external input operations. Each input event is a software task formed in the smart terminal. The application program can receive the input event from a framework layer of an operating system and process the input event, for example, trigger a computing task associated with the input event, or display the result of the input event on a display interface. Different input operations correspond to different input events, and various input events can be recognized and distinguished by software.

In this step, the mapping relationships between at least two input operations and input events are preset in the application program, that is, identification tags and input operation types, which correspond to different input events, are pre-stored. The application program is provided in an application layer of the operating system of the smart terminal, and may be application software that requires human-computer interactions, such as games and remote operation software. When the application program starts, the mapping relationships between the external input events and the touch screen input events are loaded into the application program through the Hook technology. Hook is originally meant as "a hook tool for grasping an object". In the development of computer software, the Hook technology refers to monitoring an interface of a program and intercepting data from this interface for processing. For example, game plug-in is a typical application of the Hook technology. In this embodiment, the mapping relationships between the input operations and the input events are preset in the application program through the Hook technology. The specific implementation means may include: replacing a class or method that processes an input event in the original application program, and presetting the mapping relationship in the self-defined class or method of the same name, so that the input event can be processed according to the self-defined class or method when the input event is reported by the input event interface.

S102: Detecting whether an input event interface of the application program receives the optional input event.

In this step, the input event interface of the application program is monitored to detect whether the input event interface receives the optional input event preset in step S101. The input event interface may be a window input event receiver that can receive input events reported from the framework layer of the operating system. When the input event interface receives the input event, it will inevitably produce a change in data stream or related identification bit, so a behavior of receiving the input event can be known. Taking the Android operating system as an example, in this step, the application program is monitored to obtain onInputEvent in the WindowInputEventReceiver class, thereby intercepting the input events reported by the framework layer.

S103: When the input event interface receives the optional the input event, recognizing, by the application program, the input operation corresponding to the input event according to the mapping relationship.

When it is detected in step S102 that the input event interface receives any type of input events, this step is performed. In this step, the application program recognizes an input operation corresponding to the input event through the mapping relationship. Since different types of input events inevitably have differences in software data, such as differences in different identification bits, different member variables, or different attributes, and these differences have been preset as the mapping relationships in the application program in step S101. Therefore, the input operation corresponding to the input event can be recognized.

S104: Converting the recognized input event into an input event coexisting with other types of input events.

The recognition of different types of input events only through step S103 has not yet implemented the processing of the application program for different input events, and this step needs to be performed. In this step, the conversion operation is performed, i.e., the input event recognized in step S103 is converted into an input event coexisting with other types of input events. When this step is performed, the input event is modified. The modified content may be data such as member variables and attributes that affect the characteristics of the input event, and the modified input event can coexist with other types of input events. For example, after the external input event reported by the external input device is converted, this event can coexist with the touch screen input event corresponding to the touch screen, that is, the two events can be distinguished with respect to the application program and can be processed accordingly.

S105: Reporting the input event coexisting with other types of input events.

In this step, the input event converted in step S104 is reported to other modules in the application program. For example, related data calculation is performed on the input event, or the result of the input event is displayed. For example, in a game, a user uses a joystick to perform input operations for the movements of an operation object. After this operation forms an input event, the game program must analyze the input event, calculate a movement distance of the operation object, and display a movement effect of the operation object on the display interface. In the above process, the converted input event must be reported to a related analysis and display module in the application program. In this embodiment, through a Java reflection technology, the converted input event is sent out via an onInputEvent interface. The Java reflection technology is implemented depending on a Java reflection mechanism. The Java reflection mechanism lies in that, in a running state, for any class, all the properties and methods of this class can be known; for any object, optional methods and properties of this object can be called. This function of dynamically acquiring information and dynamically calling object methods is referred to as a reflection mechanism of Java language, so the Java language is also called a dynamic language. Through the Java reflection technology, the attributes and methods of the class of the converted input event can be acquired, and then transmitted to other modules in the application program via the onInputEvent interface.

As a further improvement on the input operation processing method, in step S106, the input operations include a touch operation received by a touch screen of the smart terminal and an external input operation received by an external input device connected to the smart terminal; and the touch operation corresponds to a touch screen input event, and the external input operation corresponds to an external input event. In this improved embodiment, the types of the input operations are further divided into two types, which are a touch operation received by the touch screen and an external input operation received by an external input device. Correspondingly, the above two input operations correspond to different input events, wherein the touch operation corresponds to a touch screen input event, and the external input operation corresponds to an external input event, which facilitates the application program to recognize and process.

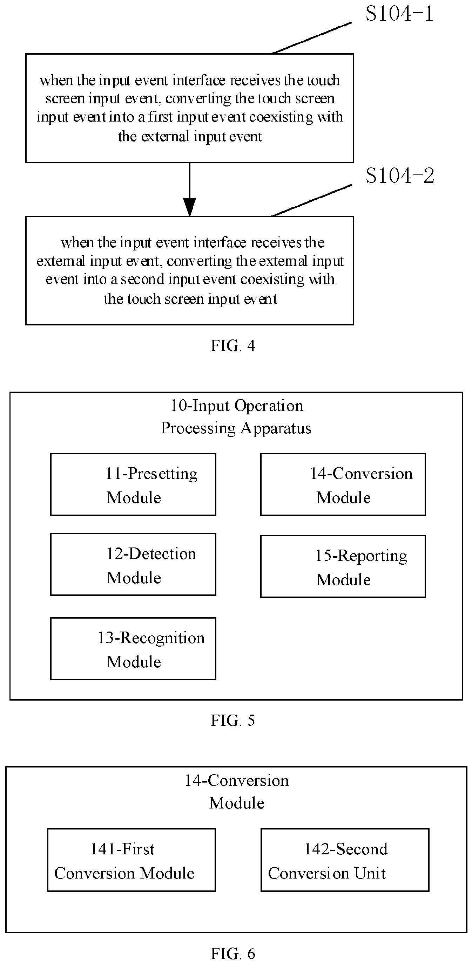

FIG. 4 is a schematic flowchart of step S104 in FIG. 3. The step S104 includes:
S104-1: when the input event interface receives the touch screen input event, converting the touch screen input event into a first input event coexisting with the external input event; and
S104-2: when the input event interface receives the external input event, converting the external input event into a second input event coexisting with the touch screen input event.

In this improved embodiment, on the basis that the input operations are divided into the touch operation and the external input operation, the step S104 is further defined. According to the type of the input event received by the input event interface, the input event is converted into the first input event or the second input event, respectively. The first input event can reflect an attribute or related parameters related to the touch operation, and the second input event can reflect an attribute or related parameters related to the external input operation, which facilitates subsequent processing by other modules in the application program.

As a further improvement on the input operation processing method, in step S102, the input event interface receives the input event from the framework layer of the operating system of the smart terminal. Since the input event is reported layer by layer after the formation of a Android driver layer of the Android operating system, in theory, the input event can be intercepted and processed in any of the Android driver layer, an Android native layer, a framework layer and an application layer. In order to reduce the workload of code transplantation when the operating system is upgraded, the processes of receiving, detecting, and processing the input event in this embodiment are all implemented in the application layer. Therefore, the input event may be received from the framework layer. In this case, whatever an operating system is upgraded, or codes of different versions of the operating systems are transplanted, there is no need to change the codes of the framework layer and the following layers, thereby reducing the workload of code transplantation.

As a further improvement on the input operation processing method, in step S101, the mapping relationships include an identification bit of each input event; and in step S103, the application program recognizes the input operation corresponding to the input event according to the identification bit in the input event. This improved embodiment further defines the recognition manner of the input event. That is, the identification is performed according to the identification bit of the input event, so it is necessary to preset the identification bits in the mapping relationships, and identify the input event according to the preset identification bit in the recognition step.

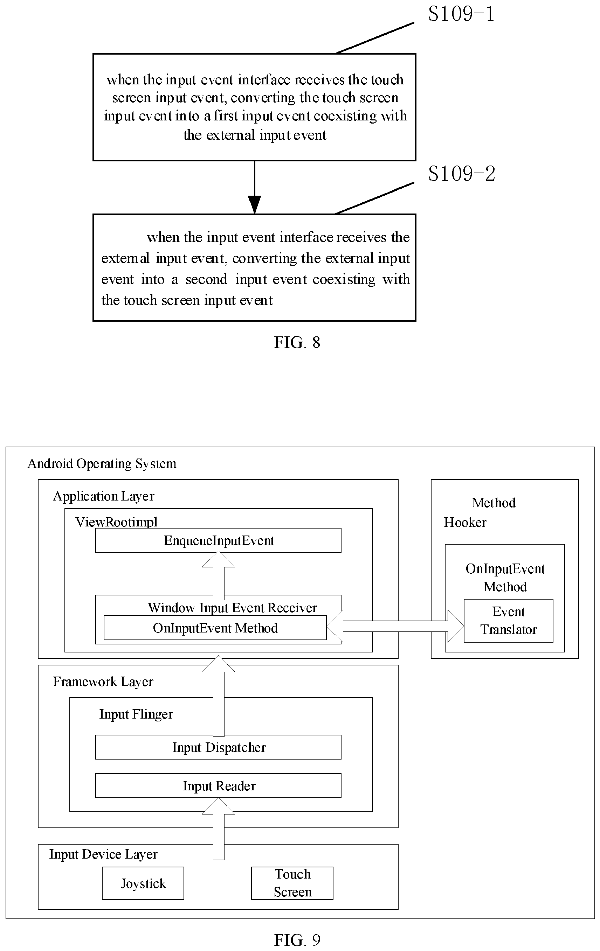

FIG. 9 is a block diagram of an application program based on the Android operating system in a preferred embodiment in accordance with the present invention. Compared with FIG. 1, a method hooker is additionally provided on the original Android operating system framework in the present invention. The method hooker includes an OnInputEvent method which also includes an event exchanger. In step S101, the method hooker is preset, and the OnInputEvent method inside the method hooker defines mapping relationships between the input operations and the input events. In step S102, whether or not the frame layer reports the input event to the window input event receiver in the application layer is detected, wherein the framework layer reports the input event via the input event interface. In steps S103 and S104, the OnInputEvent method in the window input event receiver is replaced through the method hooker, and the input event is recognized and converted by using the OnInputEvent method in the method hooker. In step S105, the input event converted by the method hooker is reported to EnqueueInputEvent.

FIG. 5 is a schematic flowchart of an input operation processing apparatus 10 in a preferred embodiment in accordance with the present invention. The input operation processing apparatus 10 is used for processing input operations received by a smart terminal, and comprises a presetting module 11, a detection module 12, a recognition module 13, a conversion module 14 and a reporting module 15.

The presetting module 11 is configured to preset mapping relationships between at least two input operations and input events in an application program. The presetting module 11 pre-stores identification tags and input operation types, which correspond to different input events, and loads the mapping relationships between the different types of input events and input operations into the application program through the Hook technology.

The detection module 12 is configured to detect whether an input event interface of the application program receives an optional input event. The detection module 12 is actually a monitoring program which monitors the input event interface, and recognizes whether there is an input event reported according to the change in data stream or the related identification bit.

The recognition module 13 is connected to the detection module 12 and the presetting module 11 and configured to, when the detection module 12 detects that the input event interface receives the optional the input event, recognize the input operation corresponding to the input event according to the mapping relationship. The recognition module 13 acquires the mapping relationship through the presetting module 11 and recognizes the input event.

The conversion module 14 is connected to the recognition module 13 and configured to convert the recognized input event into an input event coexisting with other types of input events. The conversion module 14 converts the input event according to the recognition result of the recognition module 13. For different input events, the conversion results are also different. The input event is finally converted into an input event coexisting with other types of input events, that is, different converted input events can be distinguished when processed.

The reporting module 15 is connected to the conversion module 14 and configured to report the input event coexisting with other types of input events. The reporting module 15 acquires the converted input event from the conversion module 14 and reports the input event to other modules in the application program for subsequent processing.

As a further improvement on the input operation processing apparatus 10, when the presetting module 11 presets the mapping relationships between at least two input operations and input events, the input operations include a touch operation received by a touch screen of the smart terminal and an external input operation received by an external input device connected to the smart terminal; and the touch operation corresponds to a touch screen input event, and the external input operation corresponds to an external input event.

FIG. 6 is a structural block diagram of a conversion module 14 in FIG. 5. The conversion module 14 includes:
a first conversion unit 141 configured to, when the input event interface receives the touch screen input event, convert the touch screen input event into a first input event coexisting with the external input event; and
a second conversion unit 142 configured to, when the input event interface receives the external input event, convert the external input event into a second input event coexisting with the touch screen input event.

Because the classes and methods of different types of input events have different attributes, the touch screen input event and the external input event are respectively converted by the first conversion unit 141 and the second conversion unit 142 to form the corresponding first input event and second input event.

As a further improvement on the input operation processing apparatus 10, the detection module 12 detects whether the input event interface receives the input event from a framework layer of the operating system of the smart terminal. In this improved embodiment, the detection module 12 monitors the input events reported by the framework layer.

As a further improvement on the input operation processing apparatus 10, when the presetting module 11 presets the mapping relationships between at least two input operations and input events, the mapping relationships includes an identification bit of each input event; and the recognition module 13 recognizes the input operation corresponding to the input event according to the identification bit in the input event.

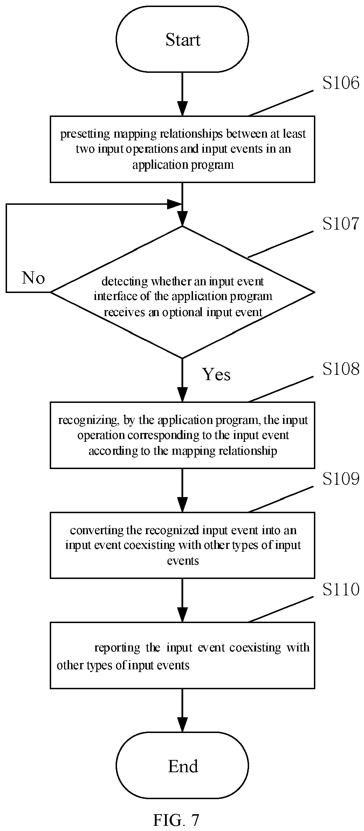

FIG. 7 is a schematic flowchart of a computer program on a computer readable storage medium in a preferred embodiment in accordance with the present invention. A computer program is stored on the computer readable storage medium and configured to process input operations received by a smart terminal, wherein the computer program, when being performed by a processor, implements the following steps:
S106: presetting mapping relationships between at least two input operations and input events in an application program;
S107: detecting whether an input event interface of the application program receives an optional input event;
S108: when the input event interface receives the optional the input event, recognizing, by the application program, the input operation corresponding to the input event according to the mapping relationship;
S109: converting the recognized input event into an input event coexisting with other types of input events; and
S110: reporting the input event coexisting with other types of input events.

As a further improvement on the computer program, in step S106, the input operations include a touch operation received by a touch screen of the smart terminal and an external input operation received by an external input device connected to the smart terminal; and the touch operation corresponds to a touch screen input event, and the external input operation corresponds to an external input event.

FIG. 8 is a schematic flowchart of step S109 in FIG. 7. The step S109 includes:
S109-1: when the input event interface receives the touch screen input event, converting the touch screen input event into a first input event coexisting with the external input event; and
S109-2: when the input event interface receives the external input event, converting the external input event into a second input event coexisting with the touch screen input event.

As a further improvement on the computer program, in step S107, the input event interface receives the input event from a framework layer of the operating system of the smart terminal.

As a further improvement on the computer program, in step S106, the mapping relationships include an identification bit of each input event; and in step S108, the application program recognizes the input operation corresponding to the input event according to the identification bit in the input event.

The method steps of the above computer program are consistent with the implementation of the input operation processing method in the present invention, and will not be described in detail.

It should be noted that the embodiments of the present invention have better implementation and do not limit the present invention in any way. Any person skilled in the art may use the technical content disclosed above to change or modify these embodiments into equivalent effective embodiments. However, any corrections or equivalent changes and modifications made to the above embodiments based on the technical essence of the present invention without departing from the technical solutions of the present invention still fall within the scope of the technical solution of the present invention.

## Claims

1. An input operation processing method, which is used for processing input operations received by a smart terminal, and comprises the following steps:
S101: presetting mapping relationships between at least two input operations and input events in an application program;
S102: detecting whether an input event interface of the application program receives an optional input event;
S103: when the input event interface receives the optional input event, recognizing, by the application program, the input operation corresponding to the input event according to the mapping relationship;
S104: converting the recognized input event into an input event coexisting with other types of input events; and
S105: reporting the input event coexisting with other types of input events.

2. The input operation processing method according to claim 1, wherein
in step S101, the input operations include a touch operation received by a touch screen of the smart terminal and an external input operation received by an external input device connected to the smart terminal; and
the touch operation corresponds to a touch screen input event, and the external input operation corresponds to an external input event.

3. The input operation processing method according to claim 2, wherein
the step S104 includes:
S104-1: when the input event interface receives the touch screen input event, converting the touch screen input event into a first input event coexisting with the external input event; and
S104-2: when the input event interface receives the external input event, converting the external input event into a second input event coexisting with the touch screen input event.

4. The input operation processing method according to any one of claims 1 to 3, wherein
in step S102, the input event interface receives the input event from a framework layer of the operating system of the smart terminal.

5. The input operation processing method according to any one of claims 1 to 3, wherein
in step S101, the mapping relationships include an identification bit of each input event; and
in step S103, the application program recognizes the input operation corresponding to the input event according to the identification bit in the input event.

6. An input operation processing apparatus, which is used for processing input operations received by a smart terminal, and comprises:
a presetting module configured to preset mapping relationships between at least two input operations and input events in an application program;
a detection module configured to detect whether an input event interface of the application program receives an optional input event;
a recognition module connected to the detection module and the presetting module and configured to, when the detection module detects that the input event interface receives the optional input event, recognize the input operation corresponding to the input event according to the mapping relationship;
a conversion module connected to the recognition module and configured to convert the recognized input event into an input event coexisting with other types of input events; and
a reporting module connected to the conversion module and configured to report the input event coexisting with other types of input events.

7. The input operation processing apparatus according to claim 6, wherein
when the presetting module presets the mapping relationships between at least two input operations and input events, the input operations include a touch operation received by a touch screen of the smart terminal and an external input operation received by an external input device connected to the smart terminal; and
the touch operation corresponds to a touch screen input event, and the external input operation corresponds to an external input event.

8. The input operation processing apparatus according to claim 7, wherein
the conversion module includes:
a first conversion unit configured to, when the input event interface receives the touch screen input event, convert the touch screen input event into a first input event coexisting with the external input event; and
a second conversion unit configured to, when the input event interface receives the external input event, convert the external input event into a second input event coexisting with the touch screen input event.

9. The input operation processing apparatus according to any one of claims 6 to 8, wherein
the detection module detects whether the input event interface receives the input event from the framework layer of the operating system of the smart terminal.

10. The input operation processing apparatus according to any one of claims 6 to 8, wherein
when the presetting module presets the mapping relationships between at least two input operations and input events, the mapping relationships include an identification bit of each input event; and
the recognition module recognizes the input operation corresponding to the input event according to the identification bit in the input event.

11. A computer readable storage medium on which a computer program is stored and which is configured to process input operations received by a smart terminal, wherein the computer program, when being performed by a processor, implements the following steps:
S106: presetting mapping relationships between at least two input operations and input events in an application program;
S107: detecting whether an input event interface of the application program receives an optional input event;
S108: when the input event interface receives the optional input event, recognizing, by the application program, the input operation corresponding to the input event according to the mapping relationship;
S109: converting the recognized input event into an input event coexisting with other types of input events; and
S110: reporting the input event coexisting with other types of input events.

12. The computer readable storage medium according to claim 11, wherein
in step S106, the input operations include a touch operation received by a touch screen of the smart terminal and an external input operation received by an external input device connected to the smart terminal; and
the touch operation corresponds to a touch screen input event, and the external input operation corresponds to an external input event.

13. The computer readable storage medium according to claim 12, wherein
the step S109 includes:
S109-1: when the input event interface receives the touch screen input event, converting the touch screen input event into a first input event coexisting with the external input event; and
S109-2: when the input event interface receives the external input event, converting the external input event into a second input event coexisting with the touch screen input event.

14. The computer readable storage medium according to any one of claims 11 to 13, wherein
in step S107, the input event interface receives the input event from a framework layer of the operating system of the smart terminal.

15. The computer readable storage medium according to any one of claims 11 to 13, wherein
in step S106, the mapping relationship includes an identification bit of each input event; and
in step S108, the application program recognizes the input operation corresponding to the input event according to the identification bit in the input event.
